# EUROPEAN PATENT SPECIFICATION

(11) **EP 1 355 174 B1**
(45) Date of publication and mention of the grant of the patent: **08.06.2011**
(21) Application number: 03252454.8
(22) Date of filing: 17.04.2003
(51) Int. Cl.: G02B 6/00, F21S 11/00

(54) **Light guide film, and light guide**
Lichtleiter Film,und Lichtleiter
Guide de lumière à couche mince, et guide de lumière

(30) Priority: 17.04.2002 JP 2002114601
(43) Date of publication of application: 22.10.2003
(73) Proprietor: FUJIFILM Corporation, Minato-ku Tokyo (JP)
(72) Inventor: Usami, Yoshihisa, c/o Fuji Photo Film Co., Ltd, Odawara-shi, Kanagawa 250-0001 (JP)
(74) Representative: Stevens, Jason Paul

(56) References cited:
- EP-A- 0 170 561
- WO-A-01/90637
- WO-A1-97/09594
- US-A- 4 152 752
- US-A- 5 436 991
- US-A- 6 025 583
- SAXE S G: "PRISMATIC FILM LIGHT GUIDES: PERFORMANCE AND RECENT DEVELOPMENTS" SOLAR ENERGY MATERIALS, ELSEVIER SCIENCE PUBLISHERS B.V. AMSTERDAM, NL, vol. 19, no. 1/2, 1 September 1989 (1989-09-01), pages 95-109, XP000036148

## Description

### BACKGROUND OF THE INVENTION

The present invention relates generally to a light guide film and a light guide, and more particularly to a light guide film and a light guide for providing efficient guidance of sunlight, etc. into houses, etc.

System proposed so far for introducing sunlight Into houses include:
A. a system that, as in a catwalk, comprises a reflector plate installed on a passage thereby reflecting sunlight for taking in the same (e.g., see JP-A's 10-269811, 5-60964 and 11-25726);
B. a system that takes in sunlight directly through a skylight (e.g., see JP-A 11-218720); and
C. a system that comprises optical fibers (e.g., see JP-A's 7-57525 and 7-335004).

With the systems A and B, however, it is difficult to guide sunlight to any desired site for illumination purposes, and the system C requires a number of optical fibers and so is difficult to install readily at low costs. With a system comprising a single optical fiber, it is difficult to branch sunlight into a plurality of sites for illumination purposes.

### SUMMARY OF THE INVENTION

In view of such problems with the prior art as described above, one object of the present invention is to provide a light guide film that can take in sunlight and guide it to a single site or a plurality of sites.

Another object of the present invention is to provide a fight guide for guiding sunlight or the like to any desired site, so that the light can efficiently be entered in or emitted from its side.

According to the first aspect of the present invention, there is provided a light guide film as claimed in claim 1.

With the light guide film of the present invention wherein light entered from the entrance means in the transparent film is guided to the exit means, from which the light is emitted, it is possible to achieve a simple, inexpensive arrangement for efficiently guiding sunlight or the like to any desired site.

Still other objects and advantages of the invention will in part be obvious and will in part be apparent from the specification.

The invention accordingly comprises the features of construction, combinations of elements, and arrangement of parts that will be exemplified In the construction hereinafter set forth, and the scope of the invention will be indicated in the claims.

### BRIEF DESCRIPTION OF THE DRAWINGS

Figs. 1(a) and 1(b) are a plan view and a side view of a first light guide film.
Fig. 2 is illustrative in schematic of one exemplary application of the light guide film shown in Figs. 1(a) and 1(b).
Fig. 3 is illustrative in schematic of another exemplary application of a modification to the light guide film shown in Figs. 1(a) and 1(b).
Fig. 4(a) is a plan view of another light guide film, and Fig. 4(b) is a sectional view taken on a one-dotted line of Fig. 4(a).
Fig. 5 is illustrative in schematic of one exemplary application of the embodiment of Figs. 4(a) and 4(b).
Figs. 6(a), 6(b) and 6(c) are illustrative in schematic of modifications to the light guide film shown in Figs. 4(a) and 4(b).
Fig. 7 is illustrative in section of one embodiment of the entrance portion of the light guide sheet according to the present Invention.
Fig. 8 is illustrative in section of one embodiment of the exit portion of the light guide sheet according to the present invention.
Figs. 9(a) and 9(b) are illustrative of how the anisotropic fine particles comprising ferromagnetic metal powders are oriented.
Figs. 10(a) and 10(b) are illustrative of how the anisotropic fine particles comprising ferromagnetic Ba ferrite powders are oriented.
Fig. 11 is illustrative of how incident light is oriented by mirror scattering.

### DESCRIPTION OF THE PREFERRED EMBODIMENTS

According to the present invention, there is provided a light guide film comprising a flexible transparent film having one end located at an outdoor site and the other end located at an indoor site, wherein sunlight is Introduced thereinto from the vicinity of the one end, and the thus introduced sunlight is totally reflected at the surface of the transparent film by means of a refractive index difference between the transparent film and air, so that the sunlight is guided to the other end located at an indoor site and emitted from the vicinity of the other end for illumination of any desired indoor site. A first light guide film, which is outside the scope of the present invention is now explained with reference to one specific embodiment.

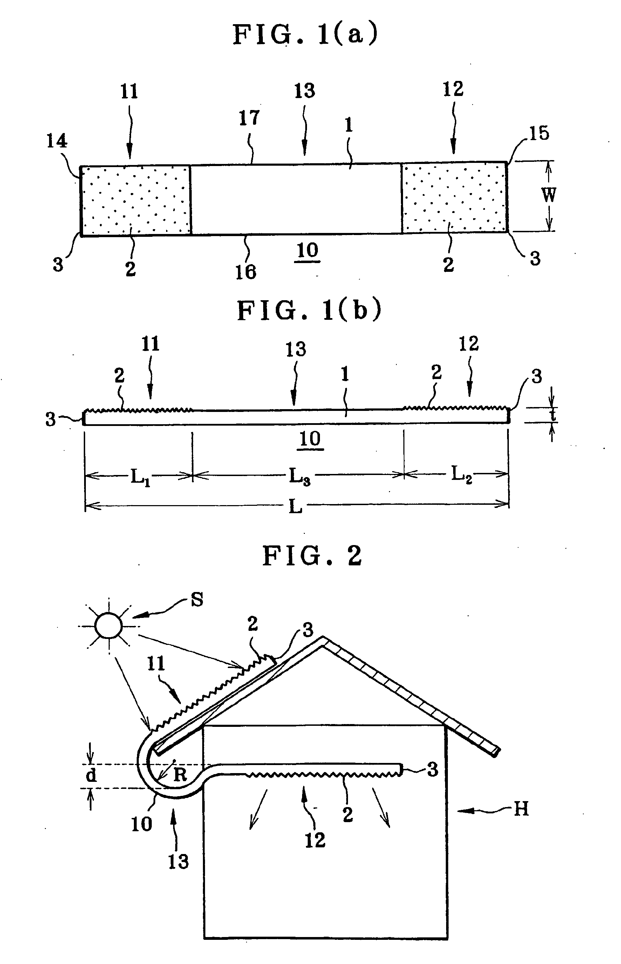

Figs. 1(a) and 1(b) are a plan view and a side view of one embodiment of a first light guide film 10. The light guide film 10 comprises a transparent film 1 made of PET or other resin, having a length L, a width W and a thickness t. The same sides of the longitudinal ends 11 and 12 of the film 1 having lengths L₁ and L₂ are sandblasted (or otherwise roughened), as shown at 2, with a surface mean roughness Ra while the opposite sides remain smooth. A portion 13 of the film 1 having a length L₃ and located between both sides 11 and 12 Is smoothened at both its sides. It is noted that the light guide film may be made of not only PET but also other transparent resins such as acrylic resin and polycarbonate resin or glass. The roughened surface 2 may be formed by various methods. For instance, use may be made of heat transfer, contact of the thermoplastic resin to be molded (as by injection or extrusion) with a mold, application of a binder with fine beads added therein to the surface of the film, or application of a resist.

In the thus constructed light guide film 10, the one end 11 functions as an entrance portion, the intermediate portion 13 as a guide portion, and the other end 12 as an exit portion. Light is entered on the roughened surface 2 of one side of the entrance portion 11 where the incident light is scattered into the transparent film 1. Most of the scattered light is entered on both surfaces of the transparent film 1 at an angle greater than the critical angle determined by a refractive index difference between air and the transparent film 1 for total reflection. The totally reflected light is then subjected to multiple reflection in the transparent film 1, whereby it is converted to guidance light that is subsequently guided via the guide portion 13 to the exit portion 12 defined by the other end. The guided light is entered on and scattered at the roughened surface 2 defined at one side of the exit portion 12, whereupon most of the scattered light leaves the transparent film 1 for utilization as illumination light or the like.

It is here noted that light incident on the end face 14 of the entrance portion 11 and light incident on the end face 16 of the exit portion 12 are not effectively utilized because they come out of them. For this reason, it is preferable that at least the end faces 14 and 15 are each provided with a reflective layer 3 formed of a metal capable of reflecting light, e.g., Ag, Al, Au, Pt, and Cu or a white coating material capable of reflecting light, thereby reflecting the light incident on the end faces 14 and 15 in the opposite direction and making effective use of the same. It is also preferable that both end faces 16 and 17 of the light guide film 10 along its longitudinal direction are similarly provided with reflective surfaces such as metal coats, thereby preventing the guided light from leaking out.

Here the surface mean roughness Ra of the roughened surface 2 defined on each one side of the entrance portion 11 and exit portion 12 should be selected from the range of preferably 0.1 to 1,000 µm, more preferably 1 to 100 µm, and most preferably 2 to 50 µm for efficient light guidance.

As shown schematically in Fig. 2, the light guide film 10 is mounted on the roof of a house H with the roughened surface 2 of the entrance portion 11 directed skyward. The guide portion 13 subsequent to the entrance portion 11 is properly bent to locate the exit portion 12 with the roughened surface 2 directed downward in the interior of the house H. In this arrangement, sunlight from the sun S is introduced into the light guidance film 10 via the roughened surface 2 of the entrance portion 11. Then, the light is guided through the guide portion 13 to the exit portion 12, leaving the light guide film 10 via the roughened surface 2 of the exit portion 12, so that the light can be used for indoor illumination.

In the light guide film 10 for efficient guidance of sunlight into the house, for instance, the lengths L₁ and L₂ of the entrance and exit portions 11 and 12 are 1 m, and the length L₃ and width W of the guide portion 13 are 2 m and 50 cm, respectively. It is understood, however, that these dimensions may be varied.

Further, the thickness t of the light guide film 10 should preferably be selected from the range of 10 to 20,000 µm. Too thin a film is too low in strength, with a drop of efficiency of light guidance. Too thick a film renders flexible bending difficult, and costs too much. The range for the thickness t should be more preferably 100 to 10,000 µm, even more preferably 150 to 5,000 µm, and most preferably 200 to 2,000 µm.

When, as shown in Fig. 2, the light guide film 10 is located between the roof and the interior of the house H to guide sunlight into the house H, a part of the guide portion 13 for connecting the roof to the interior of the house is bent at a radius of curvature R as shown. For the purpose of prevention entrance of rainwater into the house along the light guide film 10, however, it is important that between the lowest position of the upper face of the bend and the upper face of an inlet portion of the bent into the house, the height of the bend is lower than the height of the inlet portion by d. This arrangement ensures that even when the height of the exit portion within the house is lower than the height of the bend, entrance of rainwater into the house is prevented.

The radius of curvature R, at which the part of the guide portion 13 for connecting the roof to the interior of the house is bent, should preferably be selected from the range of 1 to 1,000 mm. Too small a radius of curvature R causes the light to be guided to escape out of the light guide film 10, resulting in a drop of efficiency of light guidance. Too large a radius of curvature R renders the practicality of the light guide film 10 low because of a drop of the degree of freedom in installing the same. The range for this radius of curvature R should be more preferably 2 to 500 mm, even more preferably 5 to 200 mm, and most preferably 10 to 100 mm.

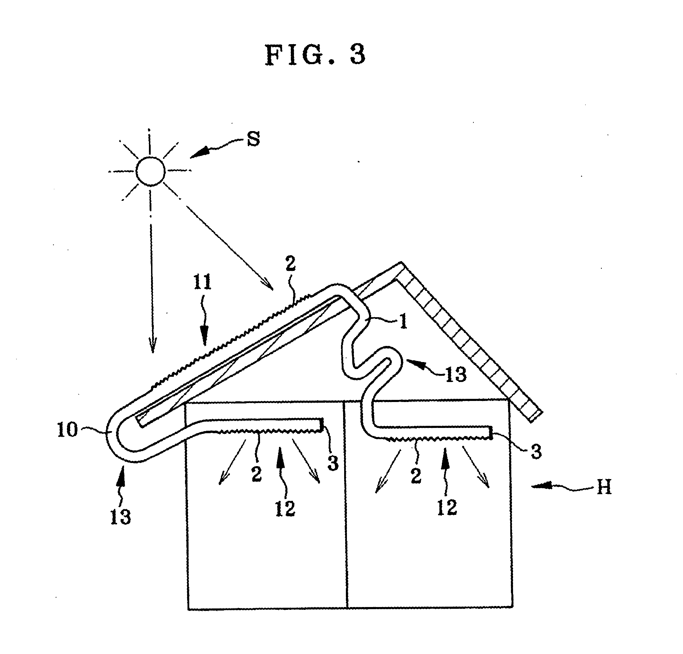

Fig. 3 is illustrative of another embodiment of the light guide film 10, which is mounted on the roof of a house H to guide light to two indoor sites. In this embodiment, a roughened surface 2 of an entrance portion 11 of a light guide film 10 is located skyward at a substantially middle portion of a transparent film 1 rather than at both its ends, and guide portions 13 are provided on both sides subsequent to the entrance portion 11. Each guide portion 13 is properly bent and extended into the house so that an exit portion 12 is provided at each end of the transparent film 1 with a roughened surface 2 thereof directed downward. Sunlight from the sun S is guided via the roughened surface 2 of the entrance portion 11 into two exit portions 12, via the roughened surfaces 2 of which the light leaves the light guide film 10, illuminating the two indoor sites. As can be appreciated from this embodiment, the entrance and exit portions 11 and 12 are not necessarily located at the ends of the light guide film 10; that is, they may be located at an intermediate portion of the light guide film 10 and in any number.

While the first light guide film has been described with reference to the specific embodiments, it is understood that various modifications may be made thereto. It is also understood that the light guide film may not only be used for guidance of sunlight into the house but may also have other applications. For instance, the light guide film may be used with a liquid crystal display device, so that extraneous light serving as auxiliary backlight can be guided as illumination light to the liquid crystal display device.

A second light guide film comprises a flexible transparent film having one end located at an outdoor site, wherein sunlight is taken therein from the vicinity of said one end, and the thus introduced light is totally reflected at the surface of the transparent film by means of a refractive index difference between the transparent film and air, and wherein the transparent film is branched at a proper position into a plurality of film members having ends, from the vicinity of which the sunlight is emitted for illumination of a plurality of indoor sites. This second light guide film is now explained with a specific embodiment.

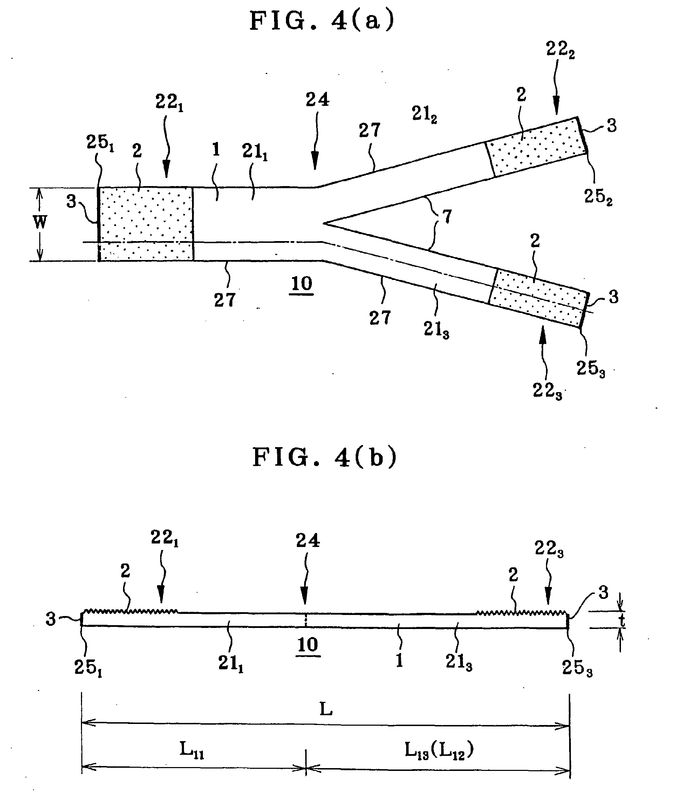

Fig. 4(a) is a plan view of the second light guide film 10, and Fig. 4(b) Is a sectional view taken on a one-dotted line of Fig. 4(a). The light guide film 10 comprises a transparent film 1 made of PET or other resin and having a length L, a width W and a thickness t. As shown, the film 1 is radially branched at a certain position into a plurality of (two in this embodiment) longitudinally extending film members. Here the unbranched film portion is indicated by 21₁, and the branched film members are shown by 21₂, 21₃ and so on. Ends 22₁, 22₂, 22₃ and so on of the respective portions 21₁, 21₂, 21₃ and so on are sandblasted (or otherwise roughened), as shown at 2, on the same sides with a surface mean roughness Ra, and the opposite sides remain smooth. If required, the opposite sides may be sandblasted or otherwise roughened. An intermediate portion 24 between these ends remains smooth on both its sides. It is noted that the light guide film may be made of not only PET but also other transparent resins such as acrylic resin and polycarbonate resin or glass. The roughened surface 2 may be formed in various fashions. For instance, use may be made of heat transfer, contact of the thermoplastic resin to be molded (as by injection or extrusion) with a mold, application of a binder with fine beads added therein to the surface of the film, or application of a resist.

In the thus constructed light guide film 10, one end 22₁ serves as an entrance portion, the intermediate portion 24 as a combined light guide and branching portion, and a plurality of other ends 22₂, 22₃ and so on as exit portions. As light is incident on the roughened surface 2 of one side of the entrance portion 22₁, the light is scattered thereat into the transparent film 1. Most of the scattered light Is incident on both surfaces of the transparent film 1 at an angle greater than the critical angle determined by a refractive index difference between air and the transparent film 1 for total reflection. Then, the totally reflected light is subjected to multiple reflection within the transparent film 1, by which the light is converted into the light to be guided. That light is guided via the combined light guide and branching portion 24 to the light guide path 21₁, from which the light is guided to a plurality of light guide paths 21₂, 21₃ and so on, arriving at their exit ends 22₂, 22₃ and so on. Most of the light incident on the roughened surfaces 2 defined by one sides of those ends is scattered thereat, leaving the transparent film 1 in the form of illumination light or the like.

It is here noted that light incident on the end face 25₁ of the entrance portion 22₁ and light incident on the end faces 25₂, 25₃ and so on of the exit portions 22₂, 22₃ and so on are not effectively utilized because they come out of them. For this reason, it is preferable that at least the end faces 25₁, 25₂, 25₃ and so on are each provided with a reflective layer 3 formed of a metal capable of reflecting light, e.g., Ag, Al, Au, Pt, and Cu or a white coating material capable of reflecting light, thereby reflecting the light incident on the end faces 25₁, 25₂, 25₃ and so on in the opposite direction and making effective use of the same. It is also preferable that both end faces 27 of the light guide paths 21₁, 21₂, 21₃ and so on along their longitudinal directions are similarly provided with reflective surfaces such as metal coats, thereby preventing the guided light from leaking out.

Here the surface mean roughness Ra of the roughened surface 2 defined on each one side of the entrance portion 22₁ and exit portions 22₂, 22₃ and so on should be selected from the range of preferably 0.1 to 1,000 µm, more preferably 1 to 100 µm, and most preferably 2 to 50 µm for efficient light guidance.

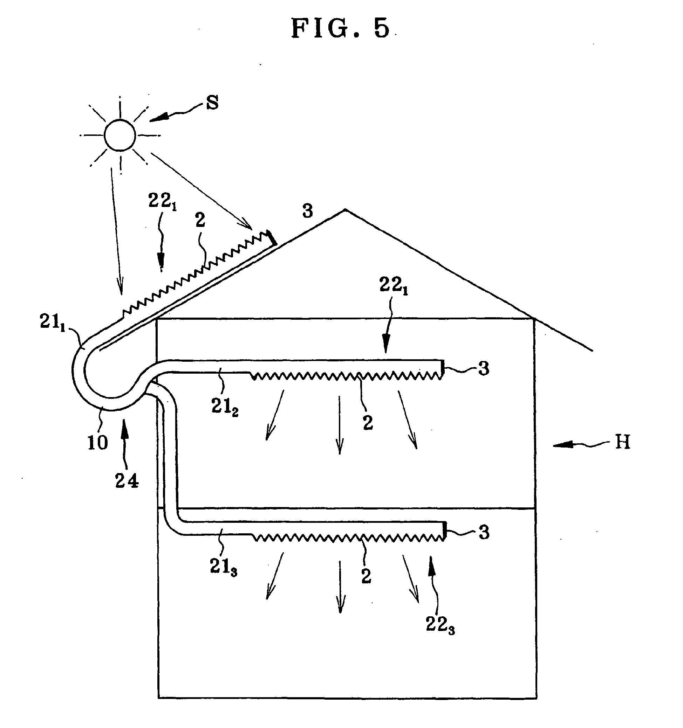

As shown schematically in Fig. 5, the second light guide film 10 is mounted on the roof of a house H with the roughened surface 2 of the entrance portion 22₁ directed skyward. The combined light guide and branching portion 24 subsequent to the entrance portion 22₁ is properly bent to locate the exit portions 22₂, 22₃ and so on with the roughened surfaces 2 directed downward in the interior of the house H. In this arrangement, sunlight from the sun S is introduced into the light guide film 10 via the roughened surface 2 of the entrance portion 22₁. Then, the light is guided through the combined light guide and branching portion 24 to the exit portions 22₂, 22₃ and so on, leaving the light guide film 10 via the roughened surfaces 2 of the exit portions 22₂, 22₃ and so on, so that the light can be used at a plurality of Indoor sites.

In the light guide film 10 for efficient guidance of sunlight into the house, for instance, the lengths L₁₁, L₁₂, L₁₃ and so on of the entrance portion 22, and exit portions 22₂, 22₃ and so on are 1 m, and the length L and width W of the combined light guide and branching portion 24 are 5 m and 50 cm, respectively. It is understood, however, that these dimensions may be varied.

Further, the thickness t of the light guide film 10 should preferably be selected from the range of 10 to 100,000 µm. Too thin a film is too low in strength, with a drop of efficiency of light guidance. Too thick a film renders flexible bending difficult, and costs too much. The range for the thickness t should be more preferably 100 to 10,000 µm, even more preferably 150 to 5,000 µm, and most preferably 200 to 2,000 µm.

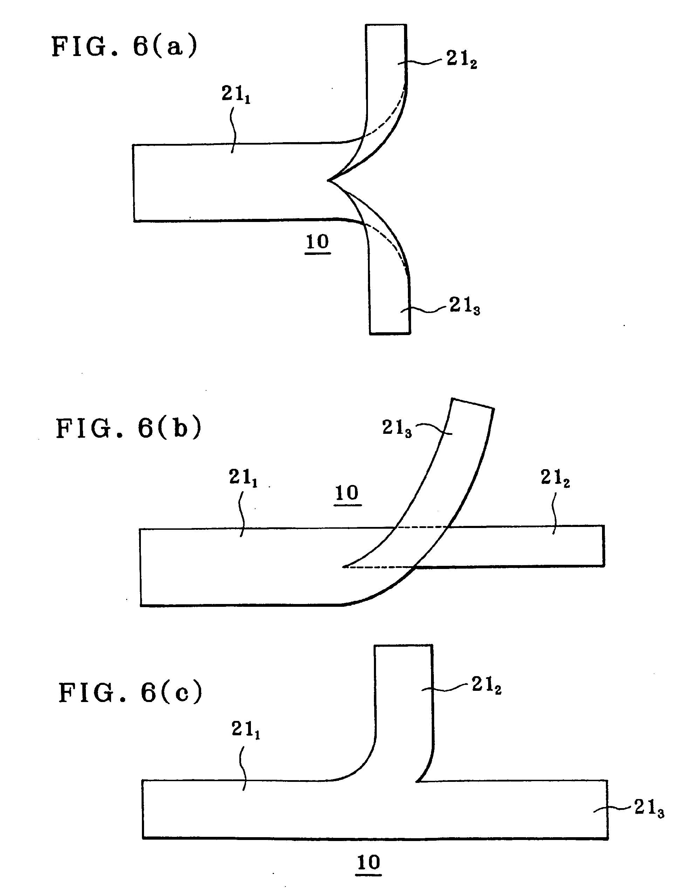

The branching arrangement for the second light guide film 10 is not always limited to one as shown in Fig. 4, wherein the entrance light guide path 21, and a plurality of exit light guide paths 21₂, 21₃ and so on are located in a radial fashion (where there are two exit light guide paths 21₂ and 21₃, they are located in a Y-shaped fashion); that is, many modifications may be made thereto. For instance, as shown in Fig. 6(a), a plurality of light guide branch paths 21₂, 21₃ and so on may be twisted in any desired directions or as shown in Fig. 6(b), a plurality of light guide branch paths 21₂, 21₃ and so on may be bent in such a way that they are put one upon another in any desired direction. Alternatively, as shown in Fig. 6(c), light guide paths 21₂ and 21₃ branched from the outset may be configured in a T-shaped fashion without branching the transparent film 1 into a plurality of film members; however, it is required to provide some contrivances to the branching portion in such a way that the light guide path 21₂ branched out of the main light guide path (the light guide path 21₃ in Fig. 6(c)) does not make too large an angle with the main light guide path.

While the second light guide film has been described with reference to the specific embodiments, it is understood that the many modifications may be made thereto. It is also understood that the light guide film may not only be used for guidance of sunlight into the house but may also have other applications. For instance, the light guide film may be used with a liquid crystal display device, so that extraneous light serving as auxiliary backlight can be guided as illumination light to the liquid crystal display device. It is further understood that the relation of the entrance portion 22₁ to the exit portions 22₂, 22₃ and so on may be reversed; light introduced from a plurality of sites may be allowed to come together at one site for guidance purposes or light introduced from a plurality of sites may be guided to a plurality of separate sites.

As can be appreciated from the foregoing explanation, the second light guide film comprises a transparent film, wherein the transparent film is branched at a proper position in such a way that at least three ends are available, and light introduced from the vicinity of at least one end thereof is guided to the remaining ends, from the vicinity of which the light is emitted. It thus possible to achieve a simple, inexpensive arrangement thereby providing efficient guidance of light like sunlight to a plurality of desired sites.

Reference is now made to a third light guide member which falls within the scope of the present invention comprising an entrance portion 40 and an exit portion 50, which may be applied to the entrance means and exit means for the first and second light guide film 10 as described above.

The principle of providing efficient entrance of extraneous light in the light guide from its side and efficient emission of guided light through the light guide from its side harnesses the fact that scattering properties differ depending on the direction of incidence of light on anisotropic fine particles such as plate-like, acicular or Rugby ball-like fine particles, as detailed below.

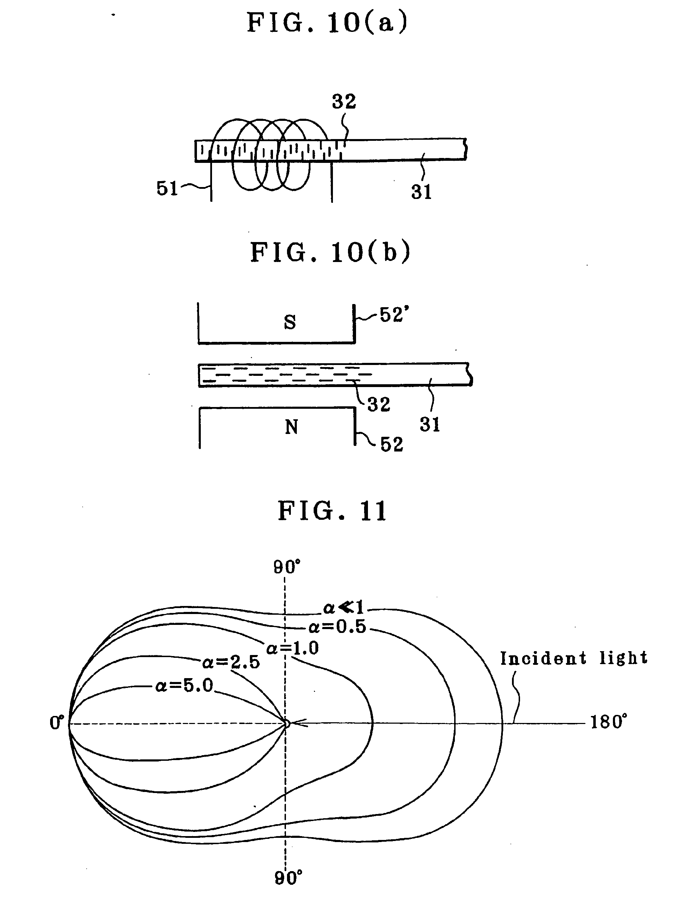

Fig. 11 is illustrative of how light is oriented by mirror scattering (see Hiroshi Kubota et al., "Handbook of Optics", an extended edition, page 1116, Asakura Shoten Co., Ltd., July 20, 1975), wherein light is incident from 180° direction, α = 2πa/λ where a is the radius of a particle and λ is a wavelength, and the refractive index of the particle in the air is 1.33. As can be seen from Fig. 11, a fine particle having an area of about α ≤ 2, i.e., a diameter or length smaller than about half of the wavelength has a scattering component that is scattered in a direction substantially perpendicular to incident light.

On the other hand, it is well known that the smaller the diameter of a particle relative to the wavelength of incident light, the smaller the sectional area of scattering and absorption and, hence, the more difficult the incident light is to scatter; the incident light is more likely to transmit the particle under no or little influence of scattering.

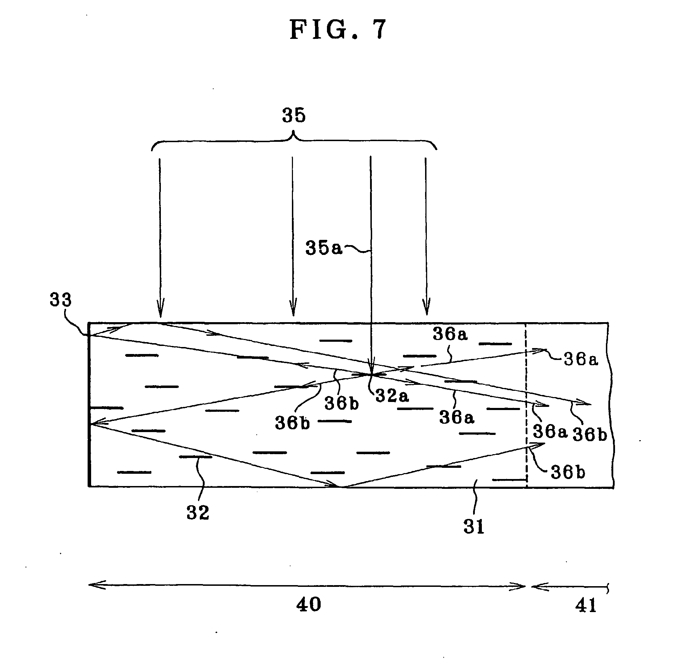

To make use of this phenomenon, a light guide sheet 31 formed typically of a sheet form of high-refractive-index transparent member having one end (entrance portion) 40 is provided. As shown in the sectional view of Fig. 7, for instance, plate-like anisotropic fine particles 32 are dispersed incorporated throughout the one end 40 in such a way that all the plate surfaces of the fine particles line up substantially parallel with both surfaces of the light guide sheet 31. Then, a reflective layer 33 is formed on the end face of the light guide sheet 31 on the side of the entrance portion 40. The plate-like anisotropic fine particles 32 used herein should have a diameter smaller than about half of the wavelength of incident light 35, specifically 500 nm or smaller and a thickness that is smaller than one third, preferably one tenth of that diameter. It is here noted that the light guide sheet 31 may comprise a sheet form of high-refractive-index transparent member provided on each side or one side with a low-refractive-index layer that provides a clad layer, or a sheet form of high-refractive-index transparent member having a one-dimensional refractive index profile structure wherein the refractive index decreases gradually from its middle portion toward both its ends.

In this arrangement, as incident light 35 is entered in the light guide sheet 31 from one side of the entrance portion 40, the incident light 35 is scattered by the anisotropic fine particles 32, giving rise to scattering components along the surface of the light guide sheet 31. Given a specific anisotropic fine particle 32a in Fig. 7, the component of incident light 35 striking the anisotropic fine particle 32a is referred to as incident light 35a. A part of the incident light 35a is scattered at the anisotropic fine particle 32a, and the scattered light includes a component 36a that is scattered in the light guide direction of the light guide sheet 31 and a component 36b that is scattered in the opposite direction. Although there are components departing from the paper, yet these components can be represented by the component 36a or 36b without presenting any problem.

Because the anisotropic fine particles 32 line up along the surface of the light guide sheet 31 as described above, the sectional area of the anisotropic fine particle 32 that takes part in scattering is very small as viewed from the component 36a scattered in the light guide direction of the light guide sheet 31 and the component 36b scattered in the opposite direction. For this reason, the scattering components 36a and 36b are hardly scattered at and absorbed in other anisotropic fine particles 32, and the scattering component 36a arrives at the light guide portion 41 of the light guide sheet 31 subsequent to the entrance portion 40, whence it is guided to the other end (not shown) of the light guide sheet 31. Meanwhile, the scattering component 36b arrives at the reflective layer 33 over the end face of the entrance portion 40 of the light guide sheet 31, where it is reflected, going back through the entrance portion 40. Again, this component is hardly scattered at and absorbed in the anisotropic fine particles 32, arriving at the light guide portion 41, through which it is guided to the other end (not shown) of the light guide sheet 31. Thus, the incident light 35 entered from one side of the entrance portion 40 into the light guide sheet 31 can efficiently be guided through the light guide sheet 31.

It is noted that the components scattered at the anisotropic fine particles 32 and departing from the paper of Fig. 7 come out of the end faces of the light guide sheet 31 parallel with the paper (both end faces of the light guide sheet 3 along the light guide direction) and may possibly be not effectively used. Accordingly, it is preferable that at least both end faces of the entrance portion 40 parallel with the paper are each provided with a reflective layer formed of a metal or white coating material capable of reflecting light, thereby preventing these components from leaking out.

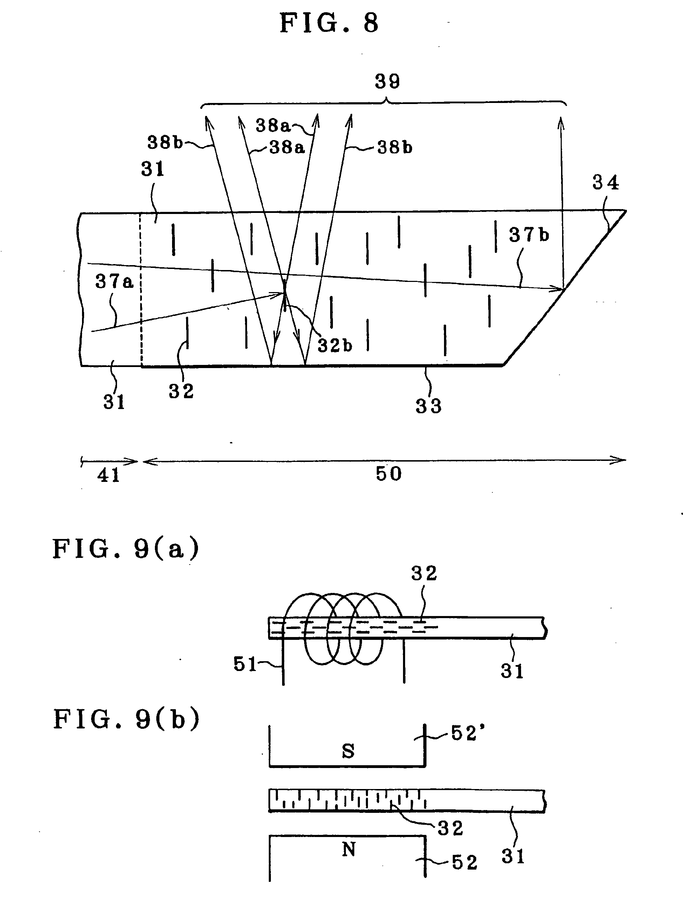

Fig. 8 is illustrative of a specific arrangement based on the same principle as the entrance portion 40 of Fig. 7, wherein light guided through a light guide sheet 31 is emitted from an exit portion 50 of the light guide sheet 31 toward one side of the light guide sheet 31 in the form of emergent light 39. For instance, plate-like anisotropic fine particles 32 like the anisotropic fine particles 32 in the entrance portion 40 are dispersed and incorporated throughout the end (exit portion) 50 of the light guide sheet 31 opposite to the entrance portion 40 in such a way that all the plate surfaces of the particles line up substantially vertically to both surfaces of the light guide sheet 31 and substantially vertically to the light guide direction. The end face of the exit portion 50 of the light guide sheet 31 is configured as an inclined plane 34, and a reflective layer 33 is formed over the inclined plane 34 and the back surface of the exit portion 50 that is opposite to the exit side thereof.

In this arrangement, light 37a guided through a light guide portion 42 of the light guide sheet 31 is scattered by the anisotropic fine particles 32, producing scattering components that intersect the surface of the light guide sheet 31. Given a specific anisotropic fine particle 32a in Fig. 8, the component of the light to be guided, which strikes the anisotropic fine particle 32a, is here called the guided light 37a. A part of the guided light 37a is scattered at the anisotropic fine particle 32a, and the scattered light includes a component 38a that is scattered in a direction toward the exit side upon intersection with the surface of the light guide sheet 31 and a component 38b that is scattered in the opposite direction. For the same reason as In Fig. 7, the scattering components 38a and 38b are hardly scattered at and absorbed in other anisotropic fine particles 32, and the scattering component 38a is emitted toward the front side of the exit portion 50. Meanwhile, the scattering component 38b arrives at the reflective layer 33 over the back surface of the exit portion 50, where it is reflected, going back through the exit portion 50. Again, the reflected light is little scattered at and absorbed in the anisotropic fine particles, arriving at and leaving the front side of the exit portion 50. Guided light 37b arriving at the inclined plane 34 at the end face of the exit portion 50 of the light guide sheet 31 without being scattered at the anisotropic fine particles 32 in the exit portion 50 is reflected at the reflective layer 33 over the inclined plane 34, directing to the front side of the exit portion 50. Thus, the guided light arriving at the exit portion 50 of the light guide sheet 31 can efficiently be directed toward one side thereof.

In the foregoing embodiment of the present invention, plate-like anisotropic fine particles are used as the anisotropic fine particles 32 which are dispersed and incorporated throughout the entrance portion 40 in such a way that they line up substantially parallel with both surfaces of the light guide sheet 31 and which are dispersed and incorporated throughout the exit portion 50 in such a way that they line up substantially vertically to the light guide sheet 31 and substantially vertically to the light guide direction. It is noted, however, that those fine particles may be in an acicular, Rugby ball or other form. Fine particles that are long in a one-dimensional direction may be oriented in the entrance portion 40 in such a way that they are substantially parallel with both surfaces of the light guide sheet 31 with their longitudinal direction located in the light guide direction, and in the exit portion 50 in such a way that they are substantially vertical to both surfaces of the light guide sheet 31.

The anisotropic fine particles 32 which, as described above, have a diameter or length smaller than about half of the wavelength of incident light 35 and a thickness smaller than one third, preferably one tenth of that diameter or length are exemplified by plate-like ferromagnetic Ba ferrite powders having an aspect (diameter-to-thickness) ratio in the range of 3.5 to 5. The powder composition is represented in terms of the Fe/Ba (molar) ratio of 10.0 to 14.0. Exemplary acicular fine particles are ferromagnetic metal powders having an aspect (length-to-breadth) ratio of 3 to 12 and containing Fe, Co and other elements like Al, Si, S, Ti, V, Cr, Cu, Y, Mo, Rh, Pd, Ag, Sn, Sb, Te, Ba, Sr, W, Au, Pb, Bi, La, Ce, Pr, Nd, P, Mn, Zn, Sr, B, and Ca.

To orient such anisotropic fine particles 32, a magnetic field is used when they comprise ferromagnetic Ba ferrite powders or ferromagnetic metal powders. To be specific, when the anisotropic fine particles 32 in a ferromagnetic metal powder form are oriented in the entrance portion 40, an uncured resin for the light guide sheet 31 is provided, wherein the anisotropic fine particles 32 comprising ferromagnetic metal powders have been dispersed and incorporated. As shown in Fig. 9(a), the uncured resin is then passed through a solenoid 51 along its axial direction, whereby the resin is cured while a magnetic field Is applied In a direction along the surface of the light guide sheet 31. When the anisotropic fine particles 32 are oriented in the exit portion 50, an uncured resin for the light guide sheet 31 is provided, wherein the anisotropic fine particles 32 comprising ferromagnetic metal powders have been dispersed and incorporated. As shown in Fig. 9(b), the uncured resin for the light guide sheet 31 is cured while it is located between vertically opposite magnetic poles 52 and 52' with the application of a magnetic field vertical to the surface of the light guide sheet 31.

When the anisotropic fine particles 32 in a ferromagnetic Ba ferrite powder form are oriented in the exit portion 50, an uncured resin for the light guide sheet 31 is provided, wherein the anisotropic fine particles 32 comprising ferromagnetic Ba ferrite powders have been dispersed and incorporated. As shown in Fig. 10(a), the uncured resin is then passed through a solenoid 51 along its axial direction, whereby the resin is cured while a magnetic field is applied in a direction along the surface of the light guide sheet 31. When the anisotropic fine particles 32 are oriented in the entrance portion 40, an uncured resin for the light guide sheet 31 is provided, wherein the anisotropic fine particles 32 comprising ferromagnetic Ba ferrite powders have been dispersed and incorporated. As shown in Fig. 10(b), the uncured resin for the light guide sheet 31 is cured while it is located between vertically opposite magnetic poles 52 and 52' with the application of a magnetic field vertical to the surface of the light guide sheet 31.

It is noted that when ferroelectric anisotropic fine particles are used as the anisotropic fine particles 32 in a plate-like, acicular, Rugby ball or other form, orientation and curing may be carried out in the same manner except that an electric field is used in place of the magnetic field.

While the present invention has been described on the presumption that the anisotropic fine particles 32 have a diameter or length that is smaller than about half of the wavelength of incident light 35 and a thickness that is smaller than one third, preferably one tenth of that diameter or length, it is understood that regarding the scattering properties, the quantity-of-scattered-light ratio between the direction in which the quantity of scattered light is greatest and the direction at a right angle with that direction, in which the quantity of scattered light is smallest, should be at least 1.5, preferably at least 2.5, and more preferably at least 3.5.

While the third light guide of the present invention has been explained on the basis of its principle and with reference to some specific embodiments, it is understood that the present invention is not necessarily limited thereto and so many modifications may be made thereto. For instance, the entrance portion 40 or exit portion 50 may be constructed by providing a coating material layer with anisotropic fine particles 32 dispersed and oriented therein on the surface of the light guide sheet 31 rather than in the interior of the light guide sheet 31. If the light guide is configured in a film form while its entrance portion is located at an outdoor site and its exit portion is positioned at an indoor site, then sunlight can be guided into a house for illumination or other purposes. The light guide of the present invention may also be used with a liquid crystal display device so that extraneous light serving as auxiliary backlight is guided as illumination light for the liquid crystal display device.

According to the third light guide member of the present invention with anisotropic fine particles dispersed and incorporated while oriented therein, wherein the anisotropic fine particles include a scattering component that is scattered in a direction substantially perpendicular to the given direction of incidence of light having a given wavelength, and the quantity-of-scattered-light ratio between the direction in which the quantity of scattered light is greatest and the direction perpendicular to that direction, in which the quantity of scattered light is smallest, is at least 1.5, it is possible to provide efficient entrance of incident light in the light guide from its side and efficient emission of the guided light from its side. The third light guide of the present invention, if configured in a film form, may be used for efficient transmission of light from one site to another site.

## Claims

1. A light guide film (10) comprising a flexible transparent film (1), wherein the transparent film is provided with entrance means (11) and exit means (12), so that light entered from the entrance means (11) in the transparent film (1) is guided to the exit means (12), from which the light is emitted, **characterized in that** the entrance means (11) and the exit means (12) comprise a roughened surface (2) and have anisotropic fine particles (32) dispersed and incorporated while oriented in a part thereof, wherein the anisotropic fine particles (32) have a diameter or length that is smaller than approximately half of a wavelength of incident light (35) and a thickness that is smaller than one third of that diameter or length.

2. A light guide film according to claim 1, wherein at least end faces (14, 15) of both ends of the transparent film (1) are each provided with a reflective layer.

3. Use of a light guide film (10) according to claim 1 or claim 2 to guide sunlight to any desired site.

4. Use of a light guide film (10) according to claim 1 or claim 2 to guide sunlight from an outdoor site to an indoor site.

5. Use of a light guide film (10) as claimed in claim 4, wherein the light guide film (10) is installed such that a height of at least a part of a portion positioned at the said outdoor site is lower than a height of a portion introduced in the said indoor site.

6. A light guide film (10) as claimed in claim 1, wherein the transparent film (1) is branched at a proper position (24) in such a way as to include at least three ends (221, 222, 223), so that light entered from near at least one end thereof is guided to a plurality of remaining ends, from near which the light is emitted.

7. A light guide film according to claim 6, wherein an entrance means is provided near one end of the at least three ends (221, 222, 223), and exit means are provided near a plurality of remaining ends.

8. A light guide film according to claim 6 or claim 7, wherein at least end faces of the at least three ends are each provided with a reflective film (3).

9. Use of a light guide film according to any one of claims 6 to 8 to guide sunlight to a plurality of desired sites.

10. Use of a light guide film according to any one of claims 6 to 8 to guide sunlight from an outdoor site to an indoor site.

11. A light guide film (10) as claimed in claim 1, wherein the transparent film (1) is branched at a proper position (24) in such a way as to include at least three ends (221, 222, 223), so that light introduced from near a plurality of ends thereof is guided to a plurality of or one end, from near which the light is emitted.

12. A light guide according to any preceding claim, wherein the anisotropic fine particles (32) comprise plate-like fine anisotropic fine particles (32) oriented substantially parallel with a light guide direction of the transparent film (1).

13. The light guide according to any preceding claim, wherein the anisotropic fine particles (32) comprise plate-like fine anisotropic fine particles (32) oriented substantially vertical to a light guide direction of the transparent film (1).

14. The light guide according to any preceding claim, wherein the anisotropic fine particles (32) comprise anisotropic fine particles (32) that are long in a one-dimensional direction and oriented substantially parallel with a light guide direction of the transparent film (1).

15. The light guide according to any preceding claim, wherein the anisotropic fine particles (32) comprise anisotropic fine particles (32) that are long in a one-dimensional direction and oriented substantially vertical to a light guide direction of the transparent film (1).

16. The light guide according to any preceding claim, wherein the anisotropic fine particles (32) comprise a ferromagnetic material, wherein the anisotropic fine particles (32) have been dispersed and incorporated in an uncured resin, and oriented and cured with application of a magnetic field.

17. The light guide according to any of claims 1 to 15, wherein the anisotropic fine particles (32) comprise a ferroelectric material, wherein the anisotropic fine particles (32) have been dispersed and incorporated in an uncured resin, and oriented and cured with application of an electric field.

18. The light guide film according to any preceding claim, wherein light scattered by the anisotropic fine particles (32) includes a scattering component (36a) that is scattered in a direction substantially perpendicular to a given direction of incidence of light (35) having a given wavelength, and a quantity-of-scattered-light ratio between a direction in which a quantity of scattered light is greatest and a direction perpendicular to that direction, in which the quantity of scattered light is smallest, is at least 1.5.

## Patentansprüche

1. Lichtleitfolie (10), enthaltend eine flexible, transparente Folie (1), wobei die transparente Folie mit einer Eintrittseinrichtung (11) und einer Austrittseinrichtung (12) versehen ist, so dass Licht, das von der Eintrittseinrichtung (11) in die transparente Folie (1) eintritt, zu der Austrittseinrichtung (12) geleitet wird, von der das Licht emittiert wird, **dadurch gekennzeichnet, dass** die Eintrittseinrichtung (11) und die Austrittseinrichtung (12) eine aufgeraute Oberfläche (2) enthalten und anisotrope feine Partikel (32) haben, die ausgerichtet in einem Teil derselben verteilt und enthalten sind, wobei die anisotropen feinen Partikel (32) einen Durchmesser oder eine Länge, die geringer als etwa die Hälfte einer Wellenlänge einfallenden Lichtes (35) ist, und eine Dicke haben, die geringer als ein Drittel dieses Durchmessers oder dieser Länge ist.

2. Lichtleitfolie nach Anspruch 1, bei der wenigstens Stirnflächen (14, 15) beider Enden der transparenten Folie (1) jeweils mit einer reflektierenden Schicht versehen sind.

3. Verwendung einer Lichtleitfolie (10) nach Anspruch 1 oder 2, um Sonnenlicht an einen beliebigen gewünschten Ort zu leiten.

4. Verwendung einer Lichtleitfolie (10) nach Anspruch 1 oder 2, um Sonnenlicht von einem Außenraum in einen Innenraum zu leiten.

5. Verwendung einer Lichtleitfolie (10) nach Anspruch 4, wobei die Lichtleitfolie (10) derart installiert ist, dass eine Höhe wenigstens eines Teils eines Abschnittes, der sich im Außenraum befindet, geringer ist als eine Höhe eines Abschnittes, der in den Innenraum geleitet ist.

6. Lichtleitfolie (10) nach Anspruch 1, wobei sich die transparente Folie (1) an einer geeigneten Stelle (24) derart verzweigt, dass sie wenigstens drei Enden (221, 222, 223) enthält, so dass Licht, das in der Nähe wenigstens eines Endes derselben eintritt, zu einer Vielzahl von verbleibenden Enden geleitet wird, aus deren Nähe das Licht emittiert wird.

7. Lichtleitfolie nach Anspruch 6, bei der die Eintrittseinrichtung in der Nähe eines Endes der wenigstens drei Enden (221, 222, 223) vorgesehen ist und die Austrittseinrichtung in der Nähe einer Vielzahl verbleibender Enden vorgesehen ist.

8. Lichtleitfolie nach Anspruch 6 oder 7, bei der wenigstens Stirnflächen der wenigstens drei Enden jeweils mit einer reflektierenden Folie (3) versehen sind.

9. Verwendung einer Lichtleitfolie nach einem der Ansprüche 6 bis 8, um Sonnenlicht zu einer Vielzahl gewünschter Orte zu leiten.

10. Verwendung einer Lichtleitfolie nach einem der Ansprüche 6 bis 8, um Sonnenlicht von einem Außenraum in einen Innenraum zu leiten.

11. Lichtleitfolie (10) nach Anspruch 1, bei der sich die transparente Folie (1) an einer geeigneten Stelle (24) derart verzweigt, dass sie wenigstens drei Enden (221, 222, 223) enthält, so dass Licht, das aus der Nähe einer Vielzahl von Enden derselben eingeleitet wird, zu einer Vielzahl von Enden oder einem Ende geleitet wird, aus deren/dessen Nähe das Licht emittiert wird.

12. Lichtleiter nach einem der vorhergehenden Ansprüche, bei dem die anisotropen feinen Partikel (32) plattenähnliche, feine, anisotrope Partikel (32) enthalten, die im wesentlichen parallel zu einer Lichtleitrichtung der transparenten Folie (1) ausgerichtet sind.

13. Lichtleiter nach einem der vorhergehenden Ansprüche, bei dem die anisotropen, feinen Partikel (32) plattenähnliche, anisotrope, feine Partikel (32) enthalten, die im wesentlichen vertikal zu einer Lichtleitrichtung der transparenten Folie (1) ausgerichtet sind.

14. Lichtleiter nach einem der vorhergehenden Ansprüche, bei dem die anisotropen, feinen Partikel (32) anisotrope, feine Partikel (32) enthalten, die in einer eindimensionalen Richtung lang und im wesentlichen parallel zu einer Lichtleitrichtung der transparenten Folie (1) sind.

15. Lichtleiter nach einem der vorhergehenden Ansprüche, bei dem die anisotropen, feinen Partikel (32) anisotrope, feine Partikel (32) enthalten, die in einer eindimensionalen Richtung lang sind und im wesentlichen vertikal zu einer Lichtleitrichtung der transparenten Folie (1) verlaufen.

16. Lichtleiter nach einem der vorangehenden Ansprüche, bei dem die anisotropen, feinen Partikel (32) ein ferromagnetisches Material enthalten, wobei die anisotropen, feinen Partikel (32) in einem nicht ausgehärteten Harz verteilt wurden und enthalten sind und unter Anwendung eines Magnetfeldes ausgerichtet und ausgehärtet werden.

17. Lichtleiter nach einem der Ansprüche 1 bis 15, bei dem die anisotropen, feinen Partikel (32) ein ferromagnetisches Material enthalten, wobei die anisotropen, feinen Partikel (32) in einem nicht ausgehärteten Harz verteilt wurden und enthalten sind und unter Anwendung eines elektrischen Feldes ausgerichtet und ausgehärtet werden.

18. Lichtleitfolie nach einem der vorhergehenden Ansprüche, bei der Licht, das durch die feinen anisotropen Partikel (32) gestreut wird, eine Streukomponente (36a) hat, die in einer Richtung im wesentlichen senkrecht zu einer gegebenen Einfallsrichtung von Licht (35) gestreut wird, das eine bestimmte Wellenlänge hat, und ein Streulichtmengenverhältnis zwischen einer Richtung, in der eine Menge gestreuten Lichts am größten ist und einer Richtung senkrecht zu dieser Richtung, in der die Menge gestreuten Lichts am geringsten ist, wenigstens 1,5 beträgt.

## Revendications

1. Couche mince de guide de lumière (10) comprenant une couche mince transparente flexible (1), dans laquelle la couche mince transparente comprend des moyens d'entrée (11) et des moyens de sortie (12) de telle sorte que de la lumière entrée à partir des moyens d'entrée (11) dans la couche mince transparente (1) est guidée vers les moyens de sortie (12), à partir de laquelle la lumière est émise, **caractérisée en ce que** les moyens d'entrée (11) et les moyens de sortie (12) comprennent une surface rugueuse (2) et ont de fines particules anisotropes (32) dispersées et incorporées tout en étant orientées dans une partie de ceux-ci, dans laquelle les fines particules anisotropes (32) ont un diamètre ou une longueur qui est inférieur(e) à une moitié environ d'une longueur d'onde de lumière incidente (35) et une épaisseur qui est inférieure à un tiers de ce diamètre ou de cette longueur.

2. Couche mince de guide de lumière selon la revendication 1, dans laquelle au moins des faces d'extrémité (14, 15) des deux extrémités de la couche mince transparente (1) sont pourvues chacune d'une couche réfléchissante.

3. Utilisation d'une couche mince de guide de lumière (10) selon la revendication 1 ou 2 pour guider la lumière solaire vers un site souhaité.

4. Utilisation d'une couche mince de guide de lumière (10) selon la revendication 1 ou 2 pour guider la lumière solaire d'un site extérieur vers un site intérieur.

5. Utilisation d'une couche mince de guide de lumière (10) selon la revendication 4, dans laquelle la couche mince de guide de lumière (10) est placée de telle sorte qu'une hauteur d'au moins une partie d'une section placée au niveau dudit site extérieur est moins élevée qu'une hauteur d'une partie introduite dans ledit site intérieur.

6. Couche mince de guide de lumière (10) selon la revendication 1, dans laquelle la couche mince transparente (1) est ramifiée à une position appropriée (24) de sorte à inclure au moins trois extrémités (221, 222, 223), de telle sorte que de la lumière introduite depuis un endroit proche d'au moins une extrémité de celle-ci est guidée vers une pluralité d'autres extrémités, à proximité de l'endroit où la lumière est émise.

7. Couche mince de guide de lumière selon la revendication 6, dans laquelle des moyens d'entrée sont prévus à proximité de l'une des extrémités des au moins trois extrémités (221, 222, 223) et des moyens de sortie sont prévus à proximité d'une pluralité d'autres extrémités.

8. Couche mince de guide de lumière selon la revendication 6 ou 7, dans laquelle au moins des faces d'extrémité des au moins trois extrémités sont pourvues chacune d'une couche mince réfléchissante (3).

9. Utilisation d'une couche mince de guide de lumière selon l'une quelconque des revendications 6 à 8 pour guider la lumière solaire vers une pluralité de sites souhaités.

10. Utilisation d'une couche mince de guide de lumière selon l'une quelconque des revendications 6 à 8 pour guider la lumière solaire d'un site extérieur vers un site intérieur.

11. Couche mince de guide de lumière (10) selon la revendication 1, dans laquelle la couche mince transparente (1) est ramifiée à une position appropriée (24) de sorte à inclure au moins trois extrémités (221, 222, 223), de telle sorte que de la lumière introduite depuis un endroit proche d'une pluralité d'extrémités de celle-ci est guidée vers une pluralité d'autres extrémités ou vers une seule extrémité, à proximité de l'endroit où la lumière est émise.

12. Guide de lumière selon l'une quelconque des revendications précédentes, dans lequel les fines particules anisotropes (32) comprennent de fines particules anisotropes semblables à une plaque (32) qui sont orientées sensiblement parallèlement à une direction de guide de lumière de la couche mince transparente (1).

13. Guide de lumière selon l'une quelconque des revendications précédentes, dans lequel les fines particules anisotropes (32) comprennent de fines particules anisotropes semblables à une plaque (32) qui sont orientées sensiblement verticalement par rapport à une direction de guide de lumière de la couche mince transparente (1).

14. Guide de lumière selon l'une quelconque des revendications précédentes, dans lequel les fines particules anisotropes (32) comprennent de fines particules anisotropes (32) qui sont longues dans une direction unidimensionnelle et qui sont orientées sensiblement parallèlement à une direction de guide de lumière de la couche mince transparente (1).

15. Guide de lumière selon l'une quelconque des revendications précédentes, dans lequel les fines particules anisotropes (32) comprennent de fines particules anisotropes (32) qui sont longues dans une direction unidimensionnelle et qui sont orientées sensiblement verticalement par rapport à une direction de guide de lumière de la couche mince transparente (1).

16. Guide de lumière selon l'une quelconque des revendications précédentes, dans lequel les fines particules anisotropes (32) comprennent un matériau ferromagnétique dans lequel les fines particules anisotropes (32) ont été dispersées et incorporées dans une résine non durcie et ont été orientées et amenées à durcir par l'application d'un champ magnétique.

17. Guide de lumière selon l'une quelconque des revendications 1 à 15, dans lequel les fines particules anisotropes (32) comprennent un matériau ferroélectrique dans lequel les fines particules anisotropes (32) ont été dispersées et incorporées dans une résine non durcie et ont été orientées et amenées à durcir par l'application d'un champ électrique.

18. Couche mince de guide de lumière selon l'une quelconque des revendications précédentes, dans laquelle une lumière dispersée par les fines particules anisotropes (32) comprend une composante de dispersion (36a) qui est dispersée dans une direction sensiblement perpendiculaire à une direction donnée d'incidence de lumière (35) ayant une longueur d'onde donnée, et un rapport de quantité de lumière dispersée entre une direction dans laquelle une quantité de lumière dispersée est la plus élevée et une direction perpendiculaire à cette direction dans laquelle la quantité de lumière dispersée est la moins élevée, est d'au moins 1,5.
